# EUROPÄISCHE PATENTSCHRIFT

(11) **EP 0 330 855 B1**
(45) Veröffentlichungstag und Bekanntmachung des Hinweises auf die Patenterteilung: **30.10.1996**
(21) Anmeldenummer: 89101869.9
(22) Anmeldetag: 03.02.1989
(51) Int. Cl.: C01B 39/00, B01J 29/06

(54) **Verfahren zur Modifizierung eines Zeoliths**
Process for the modification of a zeolite
Procédé de modification d'une zéolite

(30) Priorität: 03.03.1988 DE 3806932
(43) Veröffentlichungstag der Anmeldung: 06.09.1989
(73) Patentinhaber: AlSi-PENTA Zeolithe GmbH, D-92421 Schwandorf (DE)
(72) Erfinder: Tissler, Arno, Dr., D-7500 Karlsruhe 41 (DE); Unger, Klaus K., Prof., D-6500 Mainz (DE); Schmidt, Hubertus, Dr., D-5208 Eitorf (DE)
(74) Vertreter: Müller-Wolff, Thomas, Dipl.-Ing.

(56) Entgegenhaltungen:
- EP-A- 0 087 720
- US-A- 4 435 516

## Beschreibung

Die Erfindung betrifft ein Verfahren zur Modifizierung eins Zeoliths mit einem SiO₂/Al₂O₃-Verhältnis zwischen 20 und 150, hergestellt durch Kristallisation bei erhöhtem Druck und erhöhter Temperatur, Filtration, Ionenaustausch, Trocknung und ggf. Aktivierung durch thermische Behandlung.

Ein Verfahren der eingangs genannten Art ist aus der EP-A-0 087 720 bekannt. Dabei wird Zeolithmaterial in Pulverform durch Ionenaustausch bei 70°C, 16 h mit einer 5-%igen wäßrigen von Ammoniumchlorid behandelt, danach das ionenausgetauschte Material vollständig mit Wasser gewaschen, getrocknet und bei 450°C für 16 h kalziniert. Danach erfolgt eine Modifizierung durch Mischung mit chromatographic alumina gel, einer Abformung und einer Kalzinierung bei Temperaturen von 450°C für 8 h.

Verfahrensmodifizierungen verschiedener Zeolithtyen sind aus "Chemie in unserer Zeit", 20. Jahrgang 1986, Nr. 4, S. 121, bekannt. Das Ziel solcher Modifizierungen ist die Veränderung der katalytischen und adsorptiven Eigenschaften sowie eine Erhöhung der thermischen, chemischen und hydrothermalen Beständigkeit der Zeolithstruktur. Bei der Verbesserung der formselektiven Eigenschaften sind dazu oftmals sehr aufwendige Verfahren notwendig wie beispielsweise der Einbau von Phosphorverbindungen in das Zeolithgitter oder die Sysnthese von Metallkomplexen in den Hohlräumen des Zeolitgerüstes.

Aus verschiedenen Untersuchungen ist bekannt, daß bei der Disproportionierung von Ethylbenzol die Produktselektivität (für Paradiethylbenzol bezogen auf die gebildeten isomeren Diethylbenzole), welche ein Maß für die formselektiven Eigenschaften des Zeolith-Katalysators darstellt, bei mit TPA hergestelltem ZSM-5 Zeolith zwischen 30 und 40 % bei 2 % Umsatz und bei templatfrei hergestelltem ZSM-5 zwischen 40 und 80 % liegt, bei gleicher Kristallitgröße und vergleichbarem Si/Al-Verhältnis (Dissertation von U. Girrbach, Mainz 1987).

Aufgabe der vorliegenden Erfindung ist es, die formselektiven Eigenschaften wowie das Standzeitverzalten verschiedener Zeolithtypen durch ein einfaches und umweltschonendes Verfahren zu steigern, wobei die Aktivität des jeweiligen Zeoliths zumindest nicht wesentlich verschlechtert werden soll.

Diese Aufgabe wird erfindungsgemäß durch die in den Patentansprüchen angegebenen Merkmale gelöst. Es hat sich gezeigt, daß eine thermische Behandlung in Form einer Kalzinierung des Zeoliths im alkalischen Zustand eine wesentliche Steigerung der formselektiven Eigenschaften bis nahe an die 100 %-Grenze, bezogen auf das theoretische Selektivitäts-Optimum ermöglicht.

Weiter hat sich gezeigt, daß durch die in den Patentansprüchen angegebenen Merkmale eine wesentliche Verbesserung des Standzeitverhaltens der alkalisch kalzinierten Zeolith-Katalysatoren erreicht wird.

Der alkalische Zustand ist dabei gekennzeichnet durch einen pH-Wert >7, vorzugsweise pH = 11 bis 13, den der Zeolith unmittelbar vor der Kalzinierung in einem wäßrigen Medium aufweist. Damit soll ausgedrückt werden, daß der Zeolith an der Oberfläche auch im trockenen Zustand eine "alkalische Reaktion" zeigt, was im folgenden als "alkalisiert" bezeichnet wird.

Die Wirkung der alkalisierten Oberfläche ist dabei unabhängig von der jeweiligen Herstellungsart des Zeoliths und kann auch auf mit Templat hergestellte Zeolith-Katalysatoren und/oder dem Ionenaustausch sowie einer Aktivierung unterworfenen Zeolithen übertragen werden. Dies bedeutet, daß ein Zeolith direkt nach der Zeolithsynthese ohne vorherige Waschung der erfindungsgemäßen thermischen Behandlung unterworfen werden kann. Es kann aber auch ein mehrfach gewaschener Zeolith durch Behandlung in einer stark alkalischen Lösung alkalisiert werden bzw. in den alkalischen Zustand überführt werden. Dies ist sogar nach einem erfolgten Ionenaustausch möglich, oder wenn die Oberfläche des Zeoliths mit Säuren neutralisiert oder wenn ein ionenausgetauschter Zeolith bereits einer thermischen Aktivierung unterworfen wurde.

Die erfindungsgemäße Behandlung eines alkalisierten Zeoliths ist auf alle Zeolith-Typen anwendbar und bringt Verbesserungen bei den formselektiven Eigenschaften.

Ein besonders vorteilhaftes Anwendungsgebiet für das erfindungsgemäße Verfahren sind allerdings die speziellen formselektiven Zeolith-Typen, wie z.B. der ZSM-5. Dabei hat sich herausgestellt, daß es besonders vorteilhaft für die hydrothermale Beständigkeit von ZSM-5 ist, wenn die Zeolithsynthese zweistufig gemäß Patentanspruch 4 erfolgt. Es hat sich gezeigt, daß die dabei entstehende Zeolithstruktur sogar einer thermischen Behandlung bei über 1000 °C standhält, wobei die besonderen formselektiven Eigenschaften gemäß vorliegender Erfindung innerhalb weniger Minuten erreicht werden.

Die thermische Behandlung nach dem erfindungsgemäßen Verfahren setzt grundsätzlich schon bei Temperaturen über 200 °C ein, allerdings sind dabei lange Behandlungszeiten von mehreren Tagen erforderlich, um überhaupt einen nachweisbaren Effekt auf die Formselektivität zu erhalten. Bei hohen Temperaturen von über 1000 °C, wie sie beispielsweise in der Wirbelschicht auch für kurzzeitige Behandlungen in Bruchteilen von Minuten aufgebracht werden, kann der alkalisierte Zeolith zumindest an der Oberfläche so ausgerüstet werden, daß er erhebliche Steigerungen in seinen formselektiven Eigenschaften und seinem Standzeitverhalten aufweist. Bevorzugt wird jedoch in einem herkömmlichen Ofen der Temperaturbereich von 500 bis 650 °C für 6 bis 12 Stunden eingehalten, wobei dies der reinen Behandlungszeit ohne Aufheizphase und Abkühlungszeit entspricht.

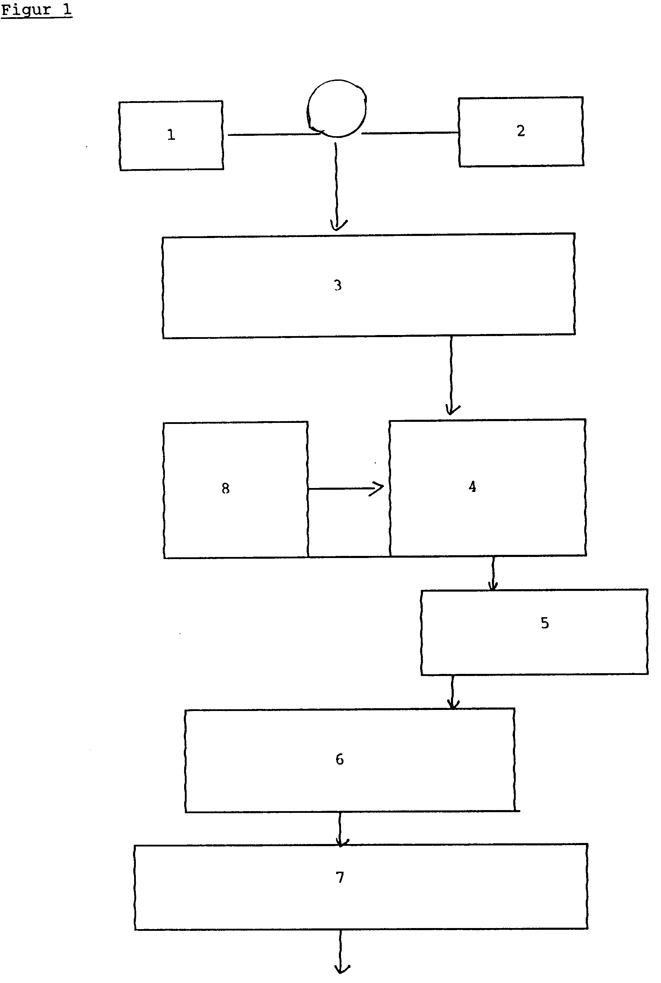

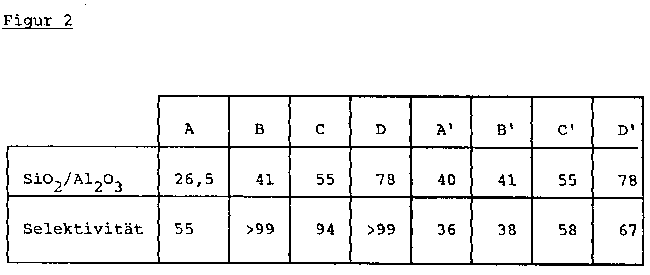

Die Erfindung wird im folgenden anhand mehrerer Ausführungsbeispiele näher erläutert. Ein Ablaufschema des erfindugnsgemäßen Verfahrens zur Herstellung von ZSM-5 ist in Fig. 1 dargestellt. Die Fig. 2 zeigt eine Gegenüberstellung der formselektiven Eigenschaften verschieden hergestellter Zeolithe.

Das Verfahrensschema nach Fig. 1 zeigt die Vermischung der Lösung 1 einer Aluminiumverbindung mit oder ohne Natriumsulfat mit der Natrium-Wasserglaslösung 2 und danach eine zweistufige Gelbildungsphase 3,4, wobei zunächst in 3 die Gelbildung bei einer Temperatur über 80°C innerhalb von 0,1 bis 3 Stunden einsetzt und anschließend in der zweiten Gelstufe 4 bei Temperaturen oberhalb 80 °C unter Zugabe von 10 bis 60 %-iger Mineralsäure 8 bis zur vollständigen Bildung eines Na-Al-Silikatgels durchgeführt wird.

Die Kristallisation 5 wird bei erhöhter Temperatur und autogenem Druck unter ansonsten üblichen Bedingungen im Autoklaven durchgeführt. Nach Filtration 6 kann der erfindungsgemäß gewonnene Zeolith ohne Waschung im alkalischen Zustand der Kalzination 7 unterworfen werden, vorzugsweise bei Temperaturen zwischen 500 und 650 °C für 6 bis 12 Stunden.

Im folgenden wird die Herstellung von vier erfindungsgemäßen Zeolithen A, B, C, D vom Typ ZSM-5 näher erläutert.

| | A | B | C | D |
|---|---|---|---|---|
| Wasserglaslösung | 65 kg | 65 kg | 65 kg | 65 kg |
| Al₂(SO₄)₃ x 18H₂O | 7,61kg | 4,87kg | 3,58kg | 2,48kg |
| H₂SO₄ (98 %) | 2,77kg | 4,06kg | 4,63kg | 5,14kg |
| Na₂SO₄ | 1,06kg | 1,06kg | 1,06kg | 1,06kg |
| H₂O | 180 kg | 180 kg | 180 kg | 180 kg |

Die Wasserglaslösung bestand aus 8,13 % Na₂O, 28,58 % SiO₂ und 0,037 % Al₂O₃. Die Kristallisation erfolgte bei einer Temperatur von 185 °C unter autogenem Druck im Autoklaven. Nach einer Filtration wurde das gewonnene Material A, B, C, D jeweils in zwei Teilmengen A, A'; B, B', C, C' und D, D' aufgeteilt. Die Mengen A, B, C, D wurden entsprechend dem erfindungsgemäßen Verfahren im alkalischen Zustand ohne Waschung einer Kalzinierung bei 500 °C für 6 Stunden unterworfen. Die Zeolithmengen A', B', C', D' wurden keiner thermischen Behandlung unterworfen sondern nach einem 5 maligen Waschen getrocknet; danach wurden die Versuchsmengen hinsichtlich ihrer katalytischen Eigenschaften (Aktivität, Formselektivität) anhand der Disproportionierung von Diethylbenzol untersucht. Das Ergebnis ist in der nachfolgenden Fig. 2 tabellarisch dargestellt, wobei in der ersten Zeile das Verhältnis SiO₂ : Al₂O₃ und in der darunterliegenden Zeile die Selektivität, ausgedrückt in % des Selektivitäts-Optimums angegeben wurde. Der Umsatzgrad betrug 2 %, die Reaktionstemperatur 523 K bei normalem Druck.

Die Aktivität der thermisch behandelten Proben A, B, C, D lag zwischen 0 und 15 % unterhalb der Aktivität der Vergleichsproben A', B', C', D'.

### ANLAGE 1

### VERGLEICHSBEISPIEL

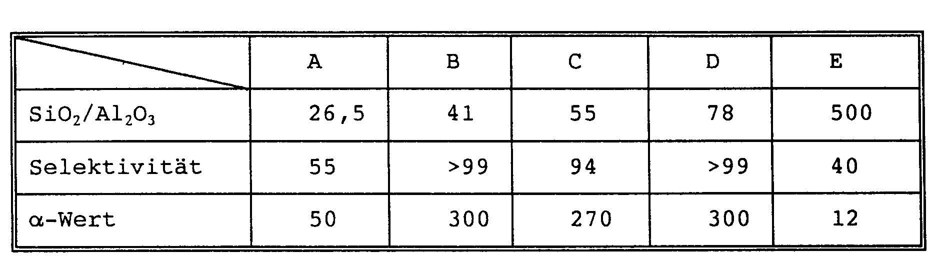

### Versuchsdurchführung

- Beispiel A-D:: siehe EP-A-0 330 885, Seite 3, Zeile 23 ff
- Beispiel E:: siehe US 4 435 516, Spalte 3 und 4 Example 3

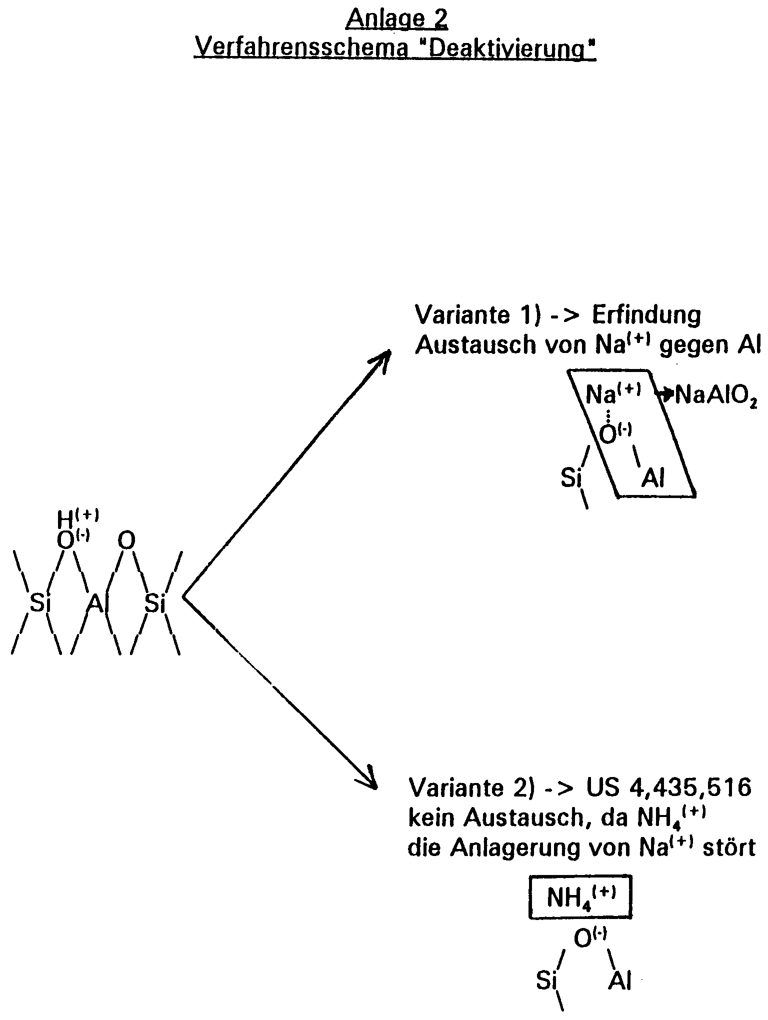

## Patentansprüche

1. Verfahren zur Modifizierung eines Zeoliths mit einem SiO₂/Al₂O₃-Verhältnis zwischen 20 und 150, hergestellt durch Kristallisation bei erhöhtem Druck und erhöhter Temperatur, Filtration, Ionenaustausch, Trocknung und ggfs. Aktivierung durch thermische Behandlung,
dadurch gekennzeichnet,
daß nach der Filtration der so gefilterte Zeolith im alkalischen im wesentlichen Stickstoff-freien Zustand, ggfs. nach Überführung in den alkalischen Zustand einer thermischen Vorbehandlung unterzogen und danach der Ionenaustausch und die Aktivierung durchgeführt wird.

2. Verfahren nach Anspruch 1,
dadurch gekennzeichnet,
daß der Zeolith vor der thermischen Vorbehandlung in wässrigem Medium bei pH > 7 an der Oberfläche alkalisiert wird, wonach er auch im trockenen Zustand eine alkalische Reaktion zeigt.

3. Verfahren nach einem der vorhergehenden Ansprüche,
dadurch gekennzeichnet,
daß die thermische Vorbehandlung bei Temperaturen zwischen 500 - 650 °C für 6 - 12 Stunden erfolgt.

4. Verfahren nach einem der vorhergehenden Ansprüche,
dadurch gekennzeichnet,
daß der filterfeuchte Zeolith aus einer zweistufigen Gelbildung und nachfolgender Kristallisation erhalten wird, wobei in der ersten Stufe eine Lösung, die eine Aluminium-verbindung mit oder ohne Natriumsulfat enthält, mit einer Natrium-Wasserglaslösung vermischt und bei Temperaturen über 80°C unter autogenem Druck innerhalb von 0,1 bis 3 Stunden gehalten wird, bis ein Gel entsteht, das (100 -x) % des für die Zeolithbildung erforderlichen SiO₂-Gehalts aufweist, wobei x Werte zwischen 30 und 90 annimmt und das SiO₂/Al₂O₃-Verhältnis zwischen 20 und 150 liegt und in einer zweiten Stufe die Gelbildung bei Temperaturen über 80°C drucklos innerhalb von 0,1 bis 3 Stunden bei intensiver Rührung und Zugabe von 10 - 60%-iger Mineralsäure bis zur vollständigen Bildung eines Natrium-Aluminium Silikatgels durchgeführt wird.

## Claims

1. A process of modifying a zeolite with a SiO₂/Al₂O₃ ratio ranging between 20 and 150, produced by crystallisation at an increased pressure and an increased temperature, filtration, ion exchange, drying and optionally activation through thermal treatment,
characterised in
that after filtration, the zeolite filtered in this way, in the alkaline, substantially nitrogen-free condition, optionally after transfer into the alkaline condition, is subjected to a thermal pre-treatment and that the ion exchange and activation take place thereafter.

2. A process according to claim 1,
characterised in
that prior to the thermal pre-treatment, the zeolite is alkalised in an aqueous medium at pH > 7 at the surface, whereupon it shows an alkaline reaction even in the dry condition.

3. A process according to any one of the preceding claims, characterised in
that the thermal pre-treatment takes place at temperatures ranging between 500 and 650 °C for 6 to 12 hours.

4. A process according to any one of the preceding claims, characterised in
that the filter-moist zeolite is obtained from a two-stage gel-forming process and subsequent crystallisation, wherein, during the first stage, a solution containing an aluminium compound with or without sodium sulphate is mixed with a sodium/water glass solution and held at temperatures in excess of 80 °C under autogenous pressure within 0.1 to 3 hours until a gel is produced which contains (100-x)% of the SiO₂ content required for the formation of zeolite, with x assuming values ranging between 30 and 90 and with the SiO₂/Al₂O₃ ratio ranging between 20 and 150, and wherein during a second stage, the formation of gel is carried out at temperatures in excess of 80 °C under pressure-less conditions within 0.1 to 3 hours under thorough stirring and the addition of 10 - 60% mineral acid until a sodium aluminium silicate gel has been formed completely.

## Revendications

1. Procédé de modification d'une zéolite présentant un rapport SiO₂/Al₂O₃ compris entre 20 et 150, produite par cristallisation sous une pression élevée et à une température élevée, filtration, séchage et éventuellement activation par traitement thermique, procédé caractérisé en ce qu'après la filtration, la zéolite ainsi filtrée à l'état alcalin essentiellement dépourvu d'azote est, éventuellement après transformation pour passage à l'état alcalin, soumise à un prétraitement thermique, puis sont réalisés l'échange d'ions et l'activation.

2. Procédé selon la revendication 1, caractérisé en ce qu'avant le traitement thermique, la surface de la zéolite est alcalinisée en milieu aqueux à pH > 7, après quoi la zéolite présente une réaction alcaline même à l'état sec.

3. Procédé selon l'une des revendications précédentes, caractérisé en ce que le prétraitement thermique est effectué à des températures comprises entre 500 et 650°C durant 6 à 12 heures.

4. Procédé selon l'une des revendications précédentes, caractérisé en ce que la zéolite humide sur filtre est obtenue à partir d'une formation de gel en deux étapes et cristallisation subséquente, et en ce que, dans une première étape, une solution contenant un composé d'aluminium, avec ou sans sulfate de sodium, est mélangée à une solution de silicate de sodium ("verre à l'eau sodique") et le mélange est maintenu à des températures supérieures à 80°C sous la pression autogène durant 0,1 à 3 heures jusqu'à ce qu'il en résulte un gel contenant (100-x) % de la teneur en SiO₂ nécessaire pour la formation d'une zéolite, x prenant des valeurs comprises entre 30 et 90; et le rapport SiO₂/Al₂0₃ se situant entre 20 et 150, et, dans une deuxième étape, la formation de gel est conduite à des températures supérieures à 80°C sans pression, en 0,1 à 3 heures, sous agitation intense et avec addition d'acide minéral à 10-60 % jusqu'à formation complète d'un gel de silicate de sodium-aluminium.
